# EUROPEAN PATENT APPLICATION

(11) **EP 4 733 697 A1**
(43) Date of publication of application: **29.04.2026**
(21) Application number: 24222259.4
(22) Date of filing: 20.12.2024
(51) Int. Cl.: F26B 25/22, B09B 3/40, F26B 9/00, C05F 9/02

(54) **A DRYING JUDGMENT METHOD FOR KITCHEN WASTE DISPOSER**

(30) Priority: 23.10.2024 CN 202411483912
(71) Applicant: Bigland Electric Appliance Co., Ltd., Dongguan, Guangdong 523000 (CN)
(72) Inventor: Liu, Zhimin, Dongguan City, Guangdong Province (CN); Lin, Dongyuan, Dongguan City, Guangdong Province (CN); Luo, TieJiang, Dongguan City, Guangdong Province (CN); Huang, Shuo, Dongguan City, Guangdong Province (CN)
(74) Representative: Meyer-Dulheuer MD Legal Patentanwälte PartG mbB

(57) **Abstract**

A method for determining a drying of a food waste disposer contains steps of: saving a comparison table of a pressure temperature of a saturated water vapor in a control unit of the food waste disposer; starting drying process; and calculating. The method further contains a step of judging automatically, after calculating the current target humidity value U_{b}, the control unit compares the current relative humidity U₁ with the current target humidity value U_{b} and automatically determines a drying status of the food waste disposer and controls a working status of the drying device based on a comparison result.

## Description

### TECHNICAL FIELD

The present invention relates to a drying control unit for kitchen waste disposers, and more particularly to a method for determining a drying of a food waste disposer.

### BACKGROUND

Kitchen waste disposers are used to convert kitchen waste into fertilizer. The program of the kitchen waste disposer stores a fixed reference humidity value for judging whether to stop drying. Each manufacturer of kitchen waste disposers determines whether to stop drying. According to product experience data, when the humidity measured by the hygrometer built into the food waste disposer reaches or falls below this standard humidity, the program of the food waste disposer will determine that the garbage and other contents in the inner barrel have been dried, thus ending a drying step and entering a next step.

The current drying control of food waste disposers includes setting a specific humidity value or other parameter values related to a based humidity value, and comparing the real-time measured value with it before deciding whether to stop a drying. However, the actual humidity value in the bucket will change with changes in ambient temperature and humidity. If the same referenced parameter value is used unchanged as a comparison value, misjudgment may occur to cause the contents in the bucket of the food waste disposer cannot be dried in a suitable state.

The present invention has arisen to mitigate and/or obviate the afore-described disadvantages.

### SUMMARY

The primary aspect of the present invention is to provide a method for determining a drying of a food waste disposer by which the dynamic reference humidity value under different working conditions is calculated instantly to avoid the influence of ambient temperature and humidity on the judgment results based on different ambient temperatures and humidities.

To obtain above-mentioned aspect, a method for determining a drying of a food waste disposer contains steps of: saving a comparison table of a pressure temperature of a saturated water vapor in a control unit of the food waste disposer, wherein multiple pressure values of the saturated water vapor corresponding to different temperatures under a standard atmospheric pressure condition are provided in the comparison table of the pressure temperature of the saturated water vapor; starting drying process, wherein at a detection point in a manifold or an air duct of the food waste disposer for exhausting air flow, the control unit dries contents of a bucket through a drying device, and the control unit dries the contents of the bucket in a real time continuously by setting a detection element at the detection point to detect a temperature and a relative humidity of the detection point, wherein the control unit simultaneously records a temperature T₀ and a relative humidity U₀ detected by the detection element when starting the drying process; calculating, wherein after going through an initial heating step and an evaporation step, the relative humidity of the detection point begins to decrease slowly, wherein when the control unit detects that a current relative humidity of the detection point is equal to or less than 80%, the control unit records a current detected temperature T₁ and a current relative humidity U₁, then the control unit looks up the comparison table of the pressure temperature of the saturated water vapor to acquire a saturated water vapor pressure e_{c0} corresponding to a temperature T₀ and a saturated water vapor pressure e_{c1} corresponding to the current detected temperature T₁, and the control unit calculates a current target humidity value U_{b} according to a following calculation formula U_{b} = e_{c0}/e_{c1} × U₀ + a, wherein a is 1% to10%; and judging automatically, wherein after calculating the current target humidity value U_{b}, the control unit compares the current relative humidity U₁ with the current target humidity value U_{b} and automatically determines a drying status of the food waste disposer and controls a working status of the drying device based on a comparison result. When the comparison result is U₁ > U_{b}, the control unit automatically determines a drying has not been completed, and the control unit controls the drying device to continue the drying.

When the comparison result is U₁ ≤ U_{b}, the control unit automatically determines the drying is completed, and the control unit controls the drying device to stop the drying. Accordingly, the method for determining the drying of the food waste disposer is capable of instantly calculating the dynamic reference humidity value under different working conditions to avoid the influence of ambient temperature and humidity on the judgment results based on different ambient temperatures and humidities.

### BRIEF DESCRIPTION OF THE DRAWINGS

FIG. 1 is a flow chart of a method for determining a drying of a food waste disposer according to a preferred embodiment of the present invention.
FIG. 2-1 is a comparison table of a pressure temperature of a saturated water vapor according to the preferred embodiment of the present invention.
FIG. 2-2 is another comparison table of the pressure temperature of the saturated water vapor according to the preferred embodiment of the present invention.

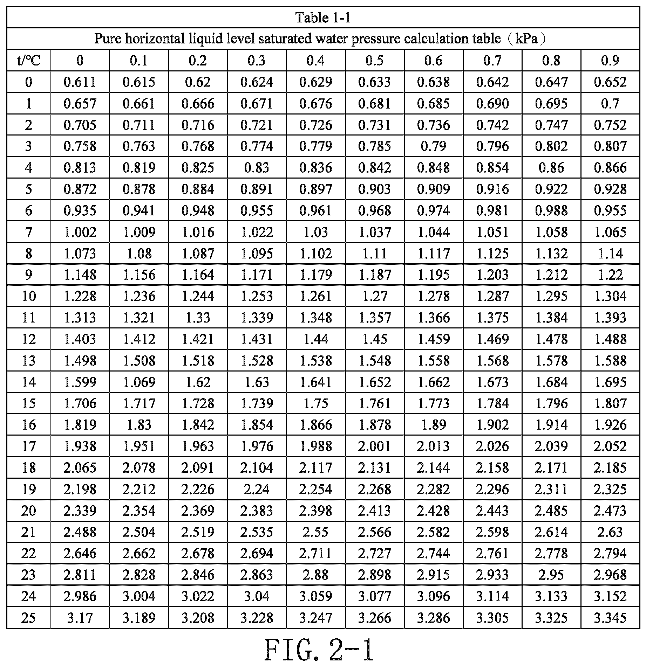

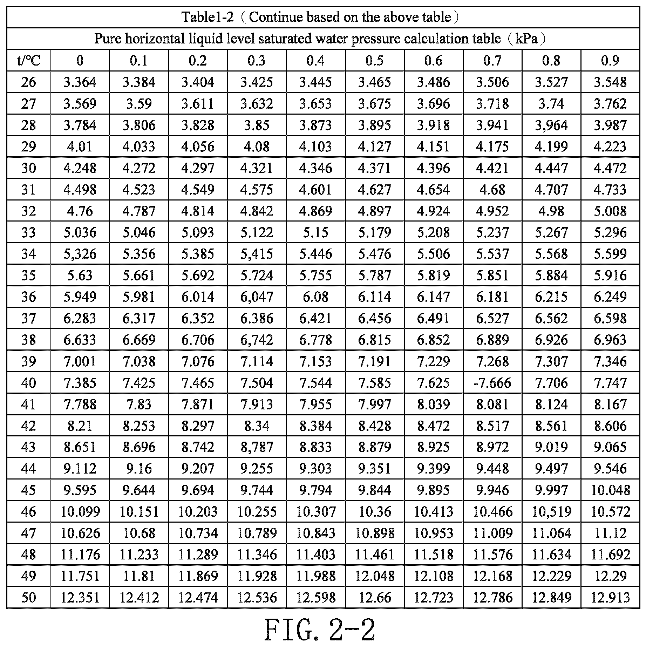

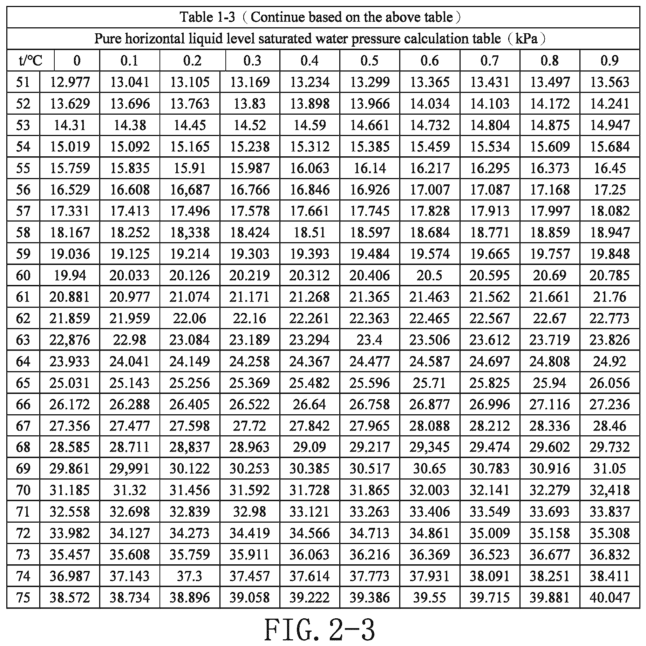

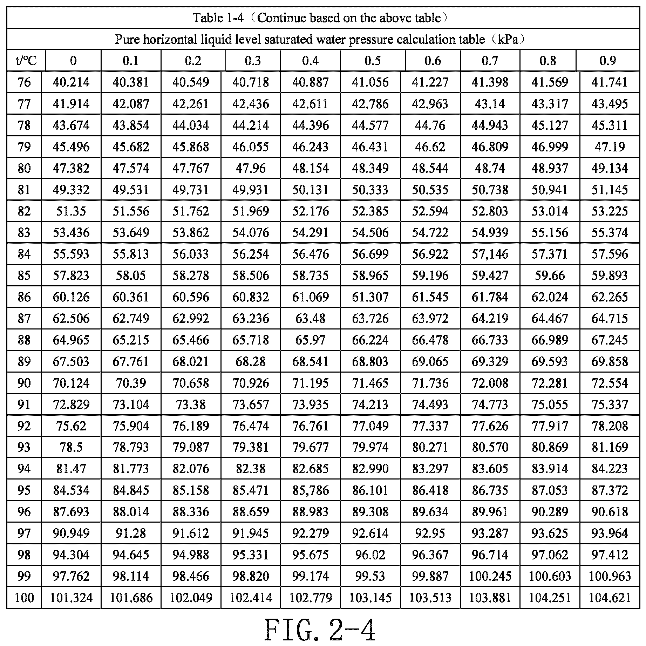

FIG. 2-3 is also another comparison table of the pressure temperature of the saturated water vapor according to the preferred embodiment of the present invention.
FIG. 2-4 is still another comparison table of the pressure temperature of the saturated water vapor according to the preferred embodiment of the present invention.

### DETAILED DESCRIPTION

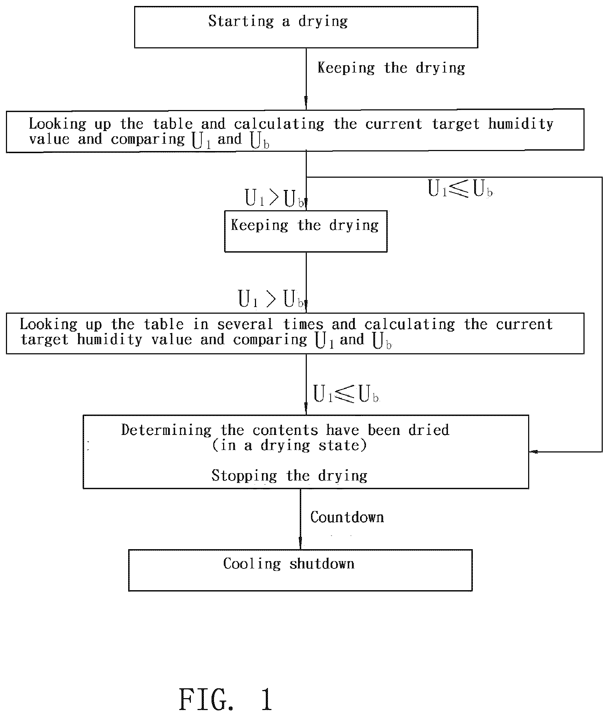

With reference to FIG. 1, a method for determining a drying of a food waste disposer according to a preferred embodiment of the present invention comprises steps of:
saving a comparison table of a pressure temperature of a saturated water vapor in a control unit of the food waste disposer, wherein multiple pressure values of the saturated water vapor corresponding to different temperatures under a standard atmospheric pressure condition are provided in the comparison table of the pressure temperature of the saturated water vapor, as shown in FIGS. 2-1 to 2-4;
starting drying process, wherein at a detection point in a manifold or an air duct of the food waste disposer for exhausting air flow, the control unit dries contents of a bucket through a drying device, and the control unit dries the contents of the bucket in a real time continuously by setting a detection element at the detection point to detect a temperature and a relative humidity of the detection point, wherein the control unit simultaneously records a temperature T₀ and a relative humidity U₀ detected by the detection element when starting the drying process;
calculating, wherein after going through an initial heating step and an evaporation step, the relative humidity of the detection point begins to decrease slowly, wherein when the control unit detects that a current relative humidity of the detection point is equal to or less than 80%, the control unit records a current detected temperature T₁ and a current relative humidity U₁, then the control unit looks up the comparison table of the pressure temperature of the saturated water vapor to acquire a saturated water vapor pressure e_{c0} corresponding to a temperature T₀ and a saturated water vapor pressure e_{c1} corresponding to the current detected temperature T₁, and the control unit calculates a current target humidity value U_{b} according to a following calculation formula U_{b} = e_{c0}/e_{c1} × U₀ + a, wherein a is 1% to10%; a is a correction parameter, which is adjusted and determined based on comprehensive errors such as measurement errors, and when a temperature range of the current temperature T₁ is detected to be 35°C - 80°C, a in the calculation formula is 3% - 8%;
judging automatically, wherein after calculating the current target humidity value U_{b}, the control unit compares the current relative humidity U₁ with the current target humidity value U_{b} and automatically determines a drying status of the food waste disposer and controls a working status of the drying device based on a comparison result, wherein when the comparison result is U₁ > U_{b}, the control unit automatically determines a drying has not been completed, and the control unit controls the drying device to continue the drying, when the comparison result is U₁ ≤ U_{b}, the control unit automatically determines the drying is completed, and the control unit controls the drying device to stop the drying.

The drying device includes a heater disposed in the food waste disposer to heat a bottom of the bucket and to dry the contents of the bucket. An internal space of the bucket is communicated with an ambient air outside the food waste disposer via bores or gaps defined in the food waste disposer, and an air pressure of the internal space of the bucket is equal to an ambient air pressure outside the food waste disposer.

An exhaust fan is accommodated in the food waste disposer and is communicated with the internal space of the bucket via an air conduit, wherein the exhaust fan provides a negative pressure and draws water vapors evaporated from the bucket. The food waste disposer includes an air purifier received therein and communicated with the internal space of the bucket via a first air discharge channel, and the air purifier is also communicated with the exhaust fan via a second air discharge channel, such that the exhaust fan discharges filtered and purified airs out of the food waste disposer. A thermo hygrometer is connected above the bucket and is configured to directly detect a temperature and a humidity directly. Alternatively, the thermo hygrometer is accommodated in an air passage between the internal space of the bucket and the air purifier so as to indirectly detect the temperature and the humidity.

When an atmospheric pressure remains unchanged, the relative humidity at a certain temperature is a ratio of an absolute humidity to a saturated humidity.

As the temperature increases, an evaporation activity of water molecules intensifies, and a maximum water vapor content or a partial pressure of the water vapors in the air, i.e., the saturated humidity value, increases. Therefore, under a same water vapor content or a same partial pressure of the water vapors, when the temperature increases, the relative humidity decreases.

Since no additional water vapors are discharged with the air flow after the garbage in the bucket of the food waste disposer is dried, the content of the water vapors in discharged gas is close to a content of the water vapors in the ambient air.

The patent invention adopts the national standard GB11605-89 "Humidity Measurement Method" to measure the temperature and the relative humidity, and uses the saturated water vapor pressure gauge (0°C - 100°C) as the database data of the comparison table of the pressure temperature of the saturated water vapor. Based on the real-time measured ambient temperature and humidity and the real-time measured temperature and relative humidity of the detection point after the work has stabilized, the current target relative humidity value in this state is calculated as a standard for judging whether the garbage in the bucket has been dried.

Preferably, in the step of judging automatically, when the comparison result is U₁ ≤ U_{b}, the control unit controls the drying device to stop the drying and to perform a countdown cooling process. After ending the countdown cooling process, the machine stops and ends a program. Thus, the drying is completed, and the contents are dried to a suitable condition

Preferably, a dynamic judgment method is added in the step of judging automatically, when the comparison result is U₁ > U_{b}, the control unit records a currently re-detected temperature T₁ and the relative humidity U₁ every 1 minute to 30 minutes and uses a newly recorded temperature T₁ and a relative humidity U₁ sequentially to repeatedly execute the step of calculating and the step of judging automatically. In the step of judging automatically, when the comparison result is U₁ > U_{b}, the control unit records the currently re-detected temperature T₁ and the relative humidity U₁ every 5 minutes to 15 minutes, then the control unit looks up the saturated water vapor pressure e_{c1} from the comparison table of the pressure temperature of the saturated water vapor, and introduces the calculation formula into the step of calculating to recalculate the current target humidity value U_{b}, thereafter the step of automatically judging is executed repeatedly with the current target humidity value U_{b} and a newly recorded relative humidity U₁.

The dynamic judgment method uses a repeated detection, a calculation and a determination at intervals. The reason is that the temperature of the detection point is not constant. For example, from the initial heating step to the evaporation step, the temperature of the detection point continues to rise in the beginning until it reaches a first thermal balance state and then remains stable for a period of time in the first thermal balance state; until all the liquid water in the bucket has evaporated, the temperature of the detection point gradually rises again until it reaches the second thermal balance state. In the second thermal balance state, the contents of the bucket are in a completely dry state.

In the drying process after the evaporation step, the temperature and the relative humidity of the detection point change, that is, the detection point has different temperatures T₁, different relative humidities U₁ and different current target humidity value U_{b} at different times, so it is judged whether the contents has been dried needs to be judged in multiple times based on the temperatures T₁ at different time points, different relative humidities U₁ and the different current target humidity value U_{b}, hence the dynamic judgment method is configured to determine whether the contents of the bucket have been in drying state.

In this embodiment, the method for determining the drying of the food waste disposer is executed based on steps of:
1) turning on the food waste disposer to start the drying, wherein the temperature T₀ is 25 °C and the relative humidity U₀ is 80% when turning on the food waste disposer;
2) heating and drying the bucket for a period of time by using the waste food disposer, wherein after the evaporation step, the relative humidity is lowered, for example, the temperature T₁ of the detection point detected and recorded at a certain moment is 60°C and the relative humidity U₁ of the detection point detected and recorded at the certain moment is 40%;
3) looking up the corresponding saturated water vapor pressures of temperature T₀ and the temperature T₁ : e_{c0} = 3170 Pa, e_{c1} = 19940 Pa according to the comparison table of the pressure temperature of the saturated water vapor; wherein a is 4%;
4) calculating the current target humidity value U_{b} when the temperature T₁ is 60 °C, wherein U_{b}=e_{c0}/e_{c1}*U₀+4%= 3170/ is changed to 19940*80%+4%=16.7%; comparing the relative humidity U₁ with the current target humidity value U_{b}, wherein the relative humidity U₁ (40%) is greater than the current target humidity value U_{b} (16.7%), which meets a judgment condition of " when the comparison result is U₁ > U_{b}", the control unit automatically determines that the drying is not completed, and the control unit controls the drying device continues to dry;
5) repeating steps 2) to 4) are every 15 minutes, wherein when the control unit detecting, recording, calculating and judging repeatedly to obtain the result is not drying still, the drying process continues;
6) re-detecting the temperature and the relative humidity of the detection point based on a set interval at a certain moment by using the control unit, and detecting and recording that the temperature T₁ of the detection point is 71 °C and the relative humidity U₁ is 11%; looking up the corresponding saturated water vapor pressures is ec₁ = 32558 Pa when the temperature T₁ is 71 °C based on the comparison table of the pressure temperature of the saturated water vapor, wherein a is 4%; calculating the current target humidity value U_{b} when the temperature T₁ is 71 °C, wherein U_{b} = 3170/32558 × 80%+4%=11.8%; comparing the relative humidity U₁ with the current target humidity value U_{b}, wherein the relative humidity U₁ (11%) is smaller than the current target humidity value U_{b} (11.8%), which meets a judgment condition of " when the comparison result is U₁ ≤ U_{b}", the control unit automatically determines that the drying is completed and controls the drying device continues to stop the drying and to enter to a cooling step.

While the first embodiments of the invention have been set forth for the purpose of disclosure, modifications of the disclosed embodiments of the invention as well as other embodiments thereof may occur to those skilled in the art. The scope of the claims should not be limited by the first embodiments set forth in the examples, but should be given the broadest interpretation consistent with the description as a whole.

## Claims

1. A method for determining a drying of a food waste disposer comprising steps of: saving a comparison table of a pressure temperature of a saturated water vapor in a control unit of the food waste disposer, wherein multiple pressure values of the saturated water vapor corresponding to different temperatures under a standard atmospheric pressure condition are provided in the comparison table of the pressure temperature of the saturated water vapor; starting drying process, wherein at a detection point in a manifold or an air duct of the food waste disposer for exhausting air flow, the control unit dries contents of a bucket through a drying device, and the control unit dries the contents of the bucket in a real time continuously by setting a detection element at the detection point to detect a temperature and a relative humidity of the detection point, wherein the control unit simultaneously records a temperature T₀ and a relative humidity U₀ detected by the detection element when starting the drying process; calculating, wherein after going through an initial heating step and an evaporation step, the relative humidity of the detection point begins to decrease slowly, wherein when the control unit detects that a current relative humidity of the detection point is equal to or less than 80%, the control unit records a current detected temperature T₁ and a current relative humidity U₁, then the control unit looks up the comparison table of the pressure temperature of the saturated water vapor to acquire a saturated water vapor pressure e_{c0} corresponding to a temperature T₀ and a saturated water vapor pressure e_{c1} corresponding to the current detected temperature T₁, and the control unit calculates a current target humidity value U_{b} according to a following calculation formula U_{b} = e_{c0}/e_{c1} × U₀ + a, wherein a is 1% to10%; and judging automatically, wherein after calculating the current target humidity value U_{b}, the control unit compares the current relative humidity U₁ with the current target humidity value U_{b} and automatically determines a drying status of the food waste disposer and controls a working status of the drying device based on a comparison result; wherein when the comparison result is U₁ > U_{b}, the control unit automatically determines a drying has not been completed, and the control unit controls the drying device to continue the drying; wherein when the comparison result is U₁ ≤ U_{b}, the control unit automatically determines the drying is completed, and the control unit controls the drying device to stop the drying.

2. The method as claimed in claim 1, wherein an internal space of the bucket is communicated with an ambient air outside the food waste disposer via bores or gaps defined in the food waste disposer, and an air pressure of the internal space of the bucket is equal to an ambient air pressure outside the food waste disposer.

3. The method as claimed in claim 1, wherein an exhaust fan is accommodated in the food waste disposer and is communicated with the internal space of the bucket via an air conduit, wherein the exhaust fan provides a negative pressure and draws water vapors evaporated from the bucket; the food waste disposer includes an air purifier received therein and communicated with the internal space of the bucket via a first air discharge channel, and the air purifier is also communicated with the exhaust fan via a second air discharge channel, such that the exhaust fan discharges filtered and purified airs out of the food waste disposer.

4. The method as claimed in claim 1, wherein the drying device includes a heater disposed in the food waste disposer to heat a bottom of the bucket and to dry the contents of the bucket.

5. The method as claimed in claim 1, wherein when a temperature range of the current temperature T₁ is detected to be 35°C - 80°C, a in the calculation formula is 3% - 8%.

6. The method as claimed in claim 1, wherein when the comparison result is U₁ > U_{b}, the control unit records a currently re-detected temperature T₁ and the relative humidity U₁ every 1 minute to 30 minutes and uses a newly recorded temperature T₁ and a relative humidity U₁ sequentially to repeatedly execute the step of calculating and the step of judging automatically.

7. The method as claimed in claim 6, wherein tn the step of judging automatically, when the comparison result is U₁ > U_{b}, the control unit records the currently re-detected temperature T₁ and the relative humidity U₁ every 5 minutes to 15 minutes, then the control unit looks up the saturated water vapor pressure e_{c1} from the comparison table of the pressure temperature of the saturated water vapor, and introduces the calculation formula into the step of calculating to recalculate the current target humidity value U_{b}, thereafter the step of automatically judging is executed repeatedly with the current target humidity value U_{b} and a newly recorded relative humidity U₁.

8. The method as claimed in claim 6, wherein in the step of judging automatically, when the comparison result is U₁ ≤ U_{b}, the control unit controls the drying device to stop the drying and to perform a countdown cooling process; after ending the countdown cooling process, the machine stops and ends a program, thus the drying is completed, and the contents are dried to a suitable condition.
